# FASCICULE DE BREVET EUROPEEN

(11) **EP 0 645 299 B1**
(45) Date de publication et mention de la délivrance du brevet: **26.11.1997**
(21) Numéro de dépôt: 94402104.7
(22) Date de dépôt: 21.09.1994
(51) Int. Cl.: B62D 33/04

(54) **Carrosseries en aluminium pour véhicules utilitaires**
Aluminium-Aufbauten für Nutzfahrzeuge
Aluminium bodies for utility vehicles

(30) Priorité: 23.09.1993 FR 9311528
(43) Date de publication de la demande: 29.03.1995
(73) Titulaire: SOCIETE INDUSTRIELLE POUR LE DEVELOPPEMENT DE LA SECURITE - SIDES, F-44600 Saint-Nazaire (FR)
(72) Inventeur: Griaud, Roland, F-44570 Trignac (FR)
(74) Mandataire: Phélip, Bruno

(56) Documents cités:
- EP-A- 0 136 264
- EP-A- 0 375 619
- EP-A- 0 541 485
- DE-C- 125 420
- FR-A- 726 050
- GB-A- 607 319
- GB-A- 1 148 752
- GB-A- 2 059 885
- GB-A- 2 169 375
- US-A- 3 068 968
- US-A- 3 844 084
- US-A- 4 978 164

## Description

La présente invention concerne un perfectionnement aux carrosseries réalisées en alliage d'aluminium, pour des véhicules utilitaires par exemple.

Ces carrosseries sont constituées d'une structure réalisée au moyen de barres profilées qui sont assemblées entre elles par des goussets ou équerres, ces goussets ou équerres étant solidaires desdites barres au moyen de vis accrochées à des taquets qui sont logés dans des voies de fixation spécialement aménagées sur ces barres, laquelle structure est ensuite habillée au moyen de plaques pour former les côtés, le toit et des compartiments.

Dans le cas de véhicules de protection civile, ce type de carrosserie permet de réaliser des compartiments pour ranger du matériel de toute sorte, lesquels compartiments peuvent également être aménagés ou divisés au moyen de cloisons ou d'étagères. L'utilisation de barres profilées permet de fixer toutes sortes d'accessoires tels que des portes, étagères ou autres et de modifier ces aménagements à volonté, à tout moment.

Compte-tenu de l'utilisation particulière de ces véhicules, la carrosserie est fortement sollicitée. Il est nécessaire de réaliser des assemblages très résistants, capables de supporter des tensions dues aux déformations de la carrosserie puisque ce genre de véhicule est susceptible de circuler en tout terrain. (voir la carrosserie dans EP-A-0 541 485)

Pour parvenir à ces résultats, l'invention propose une carrosserie dont la rigidité de la structure permet l'obtention d'un volume indéformable, même pour des véhicules tous terrains dont les châssis présentent une certaine élasticité

Selon l'invention la carrosserie est construite en alliage d'aluminium du type constituée d'une structure faite de barres profilées assemblées entre elles, et de panneaux d'habillage formant une structure centrale en forme de cage, fixée et bridée sur un soubassement quasiment indéformable, en forme de cadre rectangulaire, réalisé en acier et relié par des moyens élastiques aux longerons du châssis, laquelle cage résulte d'un assemblage de profilés continus disposés de façon à former des panneaux avant et arrière munis de montants et de traverses, lesquels panneaux sont réunis par des longerons.

Toujours selon l'invention, la structure en forme de cage est renforcée par des entraits disposés dans les trois plans à savoir le plan horizontal, vertical et le plan transversal.

Selon une autre disposition de l'invention, la structure en forme de cage comporte des traverses hautes et/ou basses qui s'étendent sur toute la largeur de la carrosserie constituant des moyens de reprise d'efforts pour les aménagements latéraux disposés d'un côté ou de l'autre de la cage.

Cette structure en forme de cage comporte en fait des barres profilées que l'on peut qualifier d'essentielles ou de prioritaires, qui sont disposées dans les trois plans c'est-à-dire le plan horizontal, vertical et transversal, lesquelles barres forment un noyau parallélépipédique qui est rigidifié par les entraits disposés eux aussi dans les trois plans ; les entraits adjacents au soubassement sont de préférence disposés à proximité des moyens de liaison de la structure sur le soubassement.

Pour améliorer ce type de carrosserie, l'invention propose également une carrosserie constituée de barres profilées munies d'aménagements originaux pour, d'une part, améliorer la résistance des assemblages de structures à laquelle contribuent les panneaux d'habillage, et, d'autre part, faciliter l'aménagement interne et la pose d'accessoires de toutes sortes.

La carrosserie selon l'invention est constituée de barres profilées munies d'au moins une voie de fixation dont les parties intérieures, coopérant avec des taquets d'assemblage, comportent de fines stries longitudinales, obtenues directement par filage.

Toujours selon l'invention, les taquets d'assemblage comportent eux aussi des striures disposées de façon à être croisées avec celles des voies de fixation des barres, lorsque lesdits taquets sont en position active d'assemblage.

Ces taquets d'assemblage sont de préférence réalisés à partir d'une barre profilée qui comporte des stries fines longitudinales sur l'une de ses faces, lesquels taquets sont découpés de façon à ce que leur face d'extrémité fasse un angle avec l'axe longitudinal de ladite barre, cet angle étant de l'ordre de 60°. Selon une autre disposition de l'invention, les barres ou taquets sont traités de façon à présenter une dureté supérieure à celle des barres profilées constituant la structure de la carrosserie de façon à permettre une légère interpénétration lors du serrage des stries du taquet dans celles de la barre profilée. Cette interpénétration s'opposera à tous mouvements relatifs d'un profilé par rapport à l'autre, lesquels mouvements sont sources de jeux néfastes pour la bonne tenue de la carrosserie.

Toujours selon l'invention, les goussets ou équerres d'assemblage assurent le centrage automatique des profilés à assembler et ils sont renforcés ou conformés avec un angle légèrement supérieur à leur angle nominal, de l'ordre de 1 à 5° par exemple, de façon à réaliser une sorte de précontrainte au niveau de la liaison entre lesdits profilés, et garantir un assemblage jointif.

Toujours selon l'invention, les vis de fixation des taquets d'assemblage comportent, à leur extrémité, une enduction de colle de façon à forcer la rotation desdits taquets après leur mise en place dans la voie de fixation, et à renforcer l'assemblage du fait d'une bonne résistance aux vibrations.

Toujours selon l'invention, les barres profilées comportent, en plus de la voie de fixation, aménagées à l'entrée et dans les faces internes des flancs latéraux, des gorges de section trapézoïdale, dont les ouvertures sont orientées l'une vers l'autre, lesquelles gorges permettent la mise en place de joints d'étanchéité de toutes sortes coopérant avec des équipements et aménagements logés dans la cavité délimitée par ces flancs latéraux.

Selon une autre disposition de l'invention, les barres profilées comportent, extérieurement, sur les faces destinées à l'accueil et au collage des panneaux d'habillage, une gorge peu profonde permettant la mise en place d'un fond de joint autocollant du type double face, qui définit l'épaisseur du joint de colle et qui permet de maintenir ledit panneau pendant la polymérisation dudit joint de colle.

Selon une autre disposition de l'invention, les barres profilées comportent, sur leur face extérieure d'accueil des panneaux, une zone striée qui permet de fixer un jonc de finition interposé entre ledit profilé et le panneau d'habillage.

L'invention sera encore détaillée à l'aide de la description suivante et des dessins annexés donnés à titre indicatif, et dans lesquels :
- la figure 1 représente, de façon schématique, la structure centrale de la carrosserie ;
- la figure 2 représente, de façon schématique, le contour global d'une carrosserie bâtie sur la structure centrale ;
- la figure 3 est une vue partielle de la structure montrant l'assemblage de deux barres 'profilées et les différents éléments qui permettent cet assemblage ;
- la figure 4 montre, en coupe, une portion de l'assemblage ;
- la figure 5 représente, de façon agrandie, une section d'une barre profilée selon l'invention montrant de façon détaillée la voie de fixation et les autres parties actives ;
- la figure 6 montre un exemple de joint utilisé pour réaliser l'étanchéité d'ouvertures réalisées dans la carrosserie, comme des portes ou des trappes ;
- la figure 7 montre l'installation d'une glissière sur une barre profilée, pour le montage de volets roulants ;
- la figure 8 montre le montage d'un cache-voie, de façon étanche, sur la barre profilée ;
- la figure 9 montre l'assemblage d'un panneau d'habillage sur une barre profilée avec le jonc de finition ;
- la figure 10 montre l'installation de panneaux d'habillage sur un angle de la structure, ainsi que le jonc de finition ;
- la figure 11 représente un gousset renforcé ;
- les figures 12 à 19 montrent des portions de barres profilées utilisées pour la réalisation de la carrosserie ;
- la figure 20 représente une portion de barre profilée destinée à réaliser les goussets d'assemblage ;
- la figure 21 représente une portion de barre profilée qui fait office d'obturateur pour les barres représentées figures 12 à 19.

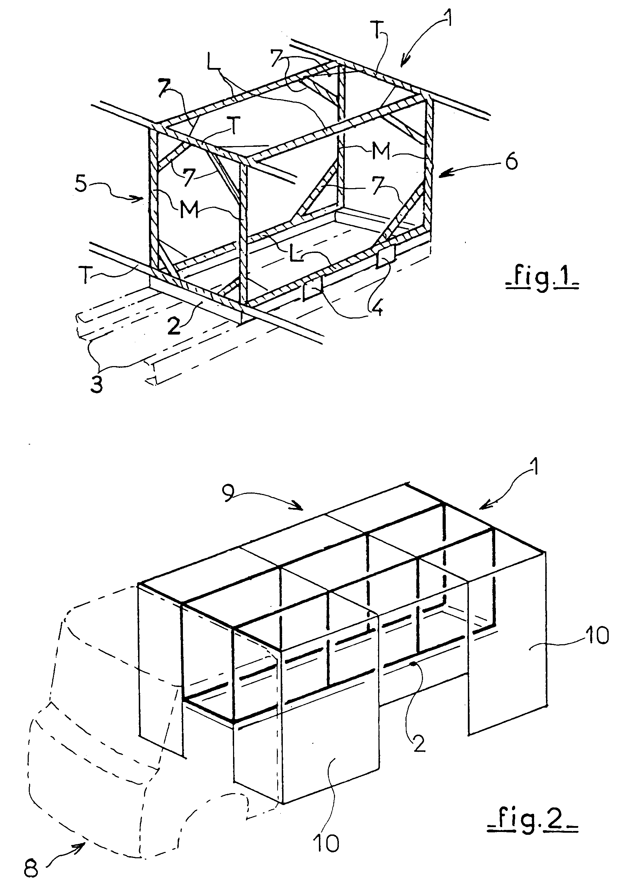

La figure 1 représente la structure principale d'une carrosserie. Cette structure 1 se présente sous la forme d'un assemblage de profilés dits prioritaires. Cette structure 1 est fixée à sa partie inférieure sur un soubassement 2 qui est lui-même relié par des moyens élastiques classiques aux longerons 3 qui constituent le châssis du véhicule.

Le soubassement 2 se présente sous la forme d'un cadre rectangulaire réalisé en acier à haute résistance. Ce soubassement est particulièrement rigide, quasiment indéformable. La structure 1 est fixée sur ce soubassement 2 au moyen de pattes d'assemblage 4 disposées latéralement par exemple comme représenté figure 1.

Pour éviter des problèmes éventuels de corrosion, la structure 1 est isolée du soubassement 2 au moyen d'une couche de matériau du type caoutchouc dont l'épaisseur est par exemple de l'ordre de 3 mm.

La structure 1 se présente sous la forme d'un parallélépipède rectangle. Elle est constituée de barres profilées continues c'est-à-dire monobloc, d'un seul tenant, assemblées entre elles pour former une sorte de cage particulièrement rigide. Ces profilés continus dits prioritaires sont disposés dans les trois plans à savoir le plan horizontal, vertical et transversal. Ces profilés constituent un panneau avant 5, un panneau arrière 6 ; ces panneaux 5 et 6 sont assemblés par des longerons L disposés dans les plans horizontaux inférieurs et supérieurs de la structure 1.

Les panneaux avant et arrière sont constitués de montants M et de traverses T.

On remarque que les traverses T débordent de part et d'autre de la structure centrale 1, latéralement. Ces traverses prioritaires T constituent des éléments essentiels pour le report des charges greffées sur cette structure centrale, c'est-à-dire toute la partie externe de la carrosserie.

La structure 1 comporte également, dans les trois plans, des entraits 7 disposés dans les angles des panneaux avant et arrière et au niveau des jonctions de ces panneaux 5 et 6 avec les longerons L.

On remarque, figure 1, la présence de trois traverses prioritaires T : deux traverses T pour le panneau avant 5 et une seule traverse T pour le panneau arrière 6, disposée à sa partie supérieure. La partie inférieure du panneau 6 ne comporte pas de traverse prioritaire. La traverse inférieure peut être disposée ailleurs que dans l'angle de la cage, entre les montants M ou entre les longerons inférieurs L.

La figure 2 représente le contour d'un véhicule 8 comportant une carrosserie 9 construite sur la cage centrale constituée par la structure 1. Cette cage centrale 1 est bridée sur le soubassement 2 et ses profilés prioritaires servent d'ancrage à des aménagements divers liés à la destination du véhicule, tels que des compartiments latéraux 10 ou des parois.

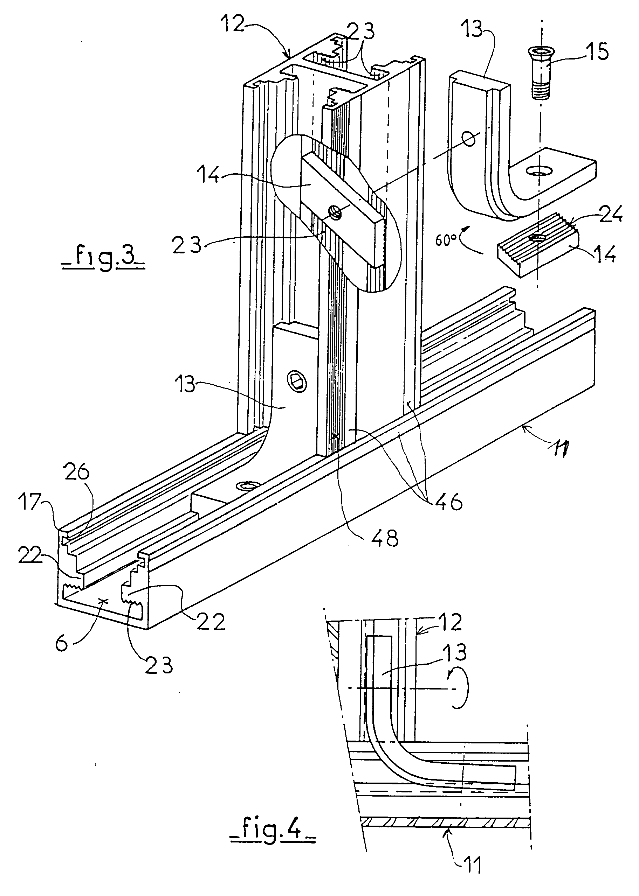

La figure 3 montre l'assemblage de deux barres profilées, perpendiculaires l'une par rapport à l'autre, pouvant constituer l'assemblage de montants sur traverses ou longerons ou autres. La barre profilée 11 horizontale par exemple, reçoit une barre profilée 12 disposée verticalement. Ces barres sont assemblées au moyen de goussets 13 ou équerres, lesquels goussets sont fixés sur lesdites barres au moyen de taquets 14 serrés par des vis 15.

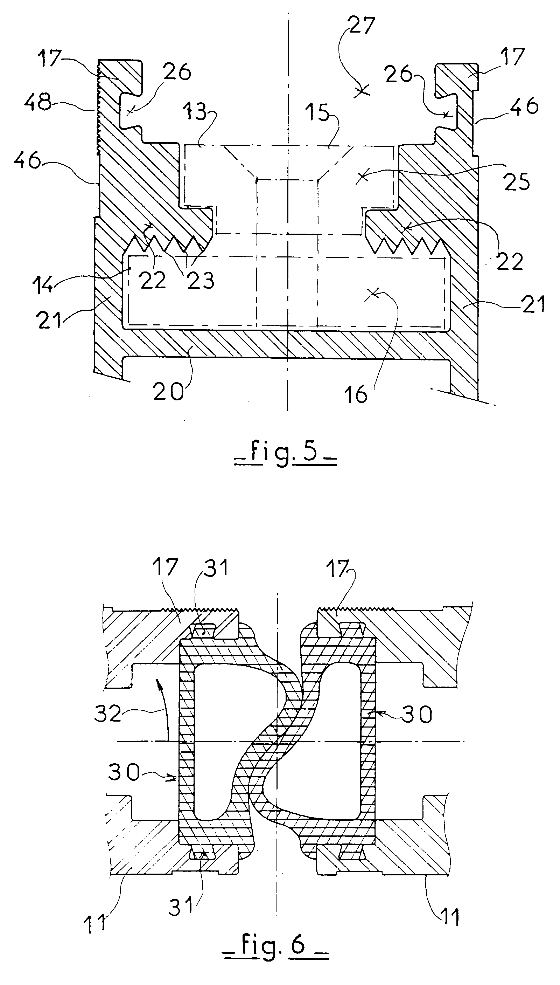

Les barres profilées ont une partie active, détaillée figure 5, qui comporte une voie interne 16 servant au logement et à la fixation des taquets 14 ; cette voie 16 est complétée par des ailes latérales 17 qui comportent des aménagements particuliers pour recevoir notamment des joints l'espace délimité par ces ailes 17 permet de loger des équipements qui apparaissent figures 6, 7 et 8.

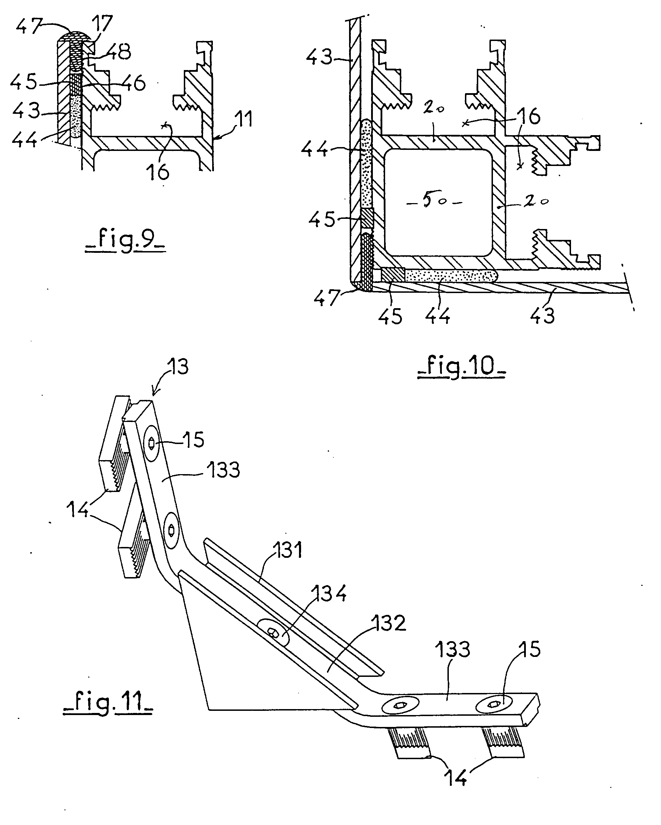

On remarque encore, sur les faces externes du profilé, des aménagements détaillés plus loin, pour la fixation des panneaux d'habillage, comme représenté figures 9 et 10.

La voie de fixation 16 consiste en une cavité définie par un fond 20, des parois latérales 21, et des rebords supérieurs 22 parallèles audit fond 20, qui recouvrent partiellement ce dernier. L'espace entre les deux rebords 22 permet l'introduction des taquets 14 dans la cavité de la voie 16, lesquels taquets 14 occupent ensuite par une rotation, selon un angle de 60°, toute la largeur de ladite voie. Les rebords 22 comportent, du côté interne de la voie de fixation, des stries 23 disposées longitudinalement ; ces stries sont obtenues directement par filage. Ces stries 23 sont relativement fines et elles coopèrent avec des stries 24 aménagées sur les taquets 14.

On remarque, figure 3, les stries 24 aménagées sur les taquets 14.

Ces taquets 14 sont par exemple obtenus par découpage de barres profilées. Les stries 24 sont disposées dans le sens longitudinal, obtenues directement par filage. La largeur des taquets est légèrement inférieure à l'espace entre les rebords 22 et leur longueur, entre les plans des extrémités, est du même ordre que l'espace entre les parois latérales 21 de la voie 16.

Lorsque le taquet est en position active dans la voie de fixation 16, ses stries 24 sont croisées avec les stries 23 de la barre profilée 11. On obtient ainsi après serrage, une interpénétration des stries.

De préférence, les taquets 14 ont une dureté supérieure à celle des barres profilées constituant la structure de façon à ce que les stries 24 des taquets 14 mordent les stries 23 desdites barres profilées.

Le taquet 14 est représenté en traits mixtes fins sur la figure 5. On a également représenté en traits mixtes fins le gousset ou équerre 13 servant à l'assemblage, ainsi que la vis 15 interposée entre ledit gousset et le taquet 14.

Les goussets 13 sont découpés dans des barres profilées et usinés pour former une sorte de méplat. Le corps des goussets s'insère dans l'évidement 25 situé au-dessus de la voie de fixation 16, alors que le méplat se positionne entre les deux rebords 22.

Le gousset 13 réalise un centrage automatique des barres profilées à assembler.

Les goussets ou équerres 13 peuvent également servir pour exercer une sorte de précontrainte entre des profilés adjacents assemblés au moyen desdits goussets.

On a représenté, figure 4, en coupe, un assemblage à 90°, montrant un gousset 13 dont l'angle entre ses deux branches est sensiblement supérieur à 90°.

Le serrage des vis d'assemblage 15 lorsque les taquets 14 sont en position active, tend à rapprocher les barres profilées l'une vers l'autre, améliorant ainsi la résistance de l'assemblage.

Cette précontrainte est obtenue avec une ouverture de l'angle nominal des goussets, comprise entre 1 et 5° par exemple, que ces goussets soient des goussets du type à 45°, 90° ou 135° par exemple.

Selon l'emplacement des goussets, et la résistance souhaitée, on pourra utiliser un ou plusieurs taquets sur chaque aile des goussets.

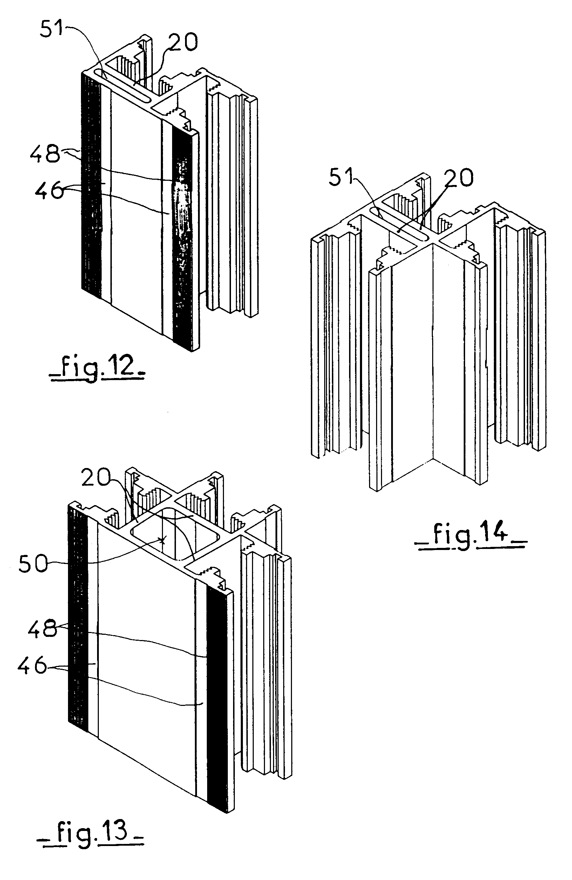

La figure 11 représente une variante de gousset. Selon cette variante, le gousset comporte un renfort d'angle 131 disposé sur sa portion centrale 132, laquelle portion centrale fait un angle de 45° environ avec chacune des portions d'extrémités 133.

Le renfort 131 est assemblé sur la portion centrale 132 au moyen d'une vis 134.

Ce renfort 131 a une largeur qui correspond à la largeur des profilés de façon à assurer une certaine continuité au niveau des angles d'assemblage.

Disposé dos à dos, ce type de gousset 13 renforcé, permet de réaliser une sorte d'encastrement entre les profilés.

Les barres profilées tout comme les goussets, taquets et vis, sont traitées contre la corrosion.

Toujours figure 5, on remarque que la barre profilée comporte encore, au-dessus de l'évidement 25, les flancs 17 mentionnés précédemment, dans l'épaisseur desquels on trouve des gorges 26 de section trapézoïdale. La cavité 27 entre ces flancs 17, permet de loger des accessoires divers comme détaillés ci-après en liaison avec les figures 6 à 8.

Cette cavité 27 se situe dans l'ouverture de la barre profilée, à l'entrée, avant l'évidement 25 qui reçoit le gousset, lequel évidement communique avec la voie de fixation 16. Ainsi, il n'y a pas d'interférence entre les goussets 13 et les accessoires et équipements qui peuvent prendre place dans la cavité 27.

On a représenté, figure 6, une coupe partielle d'une ouverture du type porte bat tante, ou trappe. Un joint 30 en forme de bourrelet, est disposé à l'extrémité de la barre profilée, dans la cavité 27. Ce joint comporte des barrettes latérales 31 qui s'insèrent dans les gorges trapézoïdales 26 aménagées dans les flancs 17. Ce bourrelet convient donc pour assurer l'étanchéité d'une porte ou d'une trappe. Il est disposé à la fois sur le dormant et sur l'ouvrant, lequel ouvrant est mobile comme indiqué par la flèche 32.

Dans le cas d'une trappe positionnée en partie basse de la carrosserie, servant de marche lorsqu'elle est ouverte, ce type de bourrelet protège les utilisateurs contre les heurts sur le rebord de cette trappe.

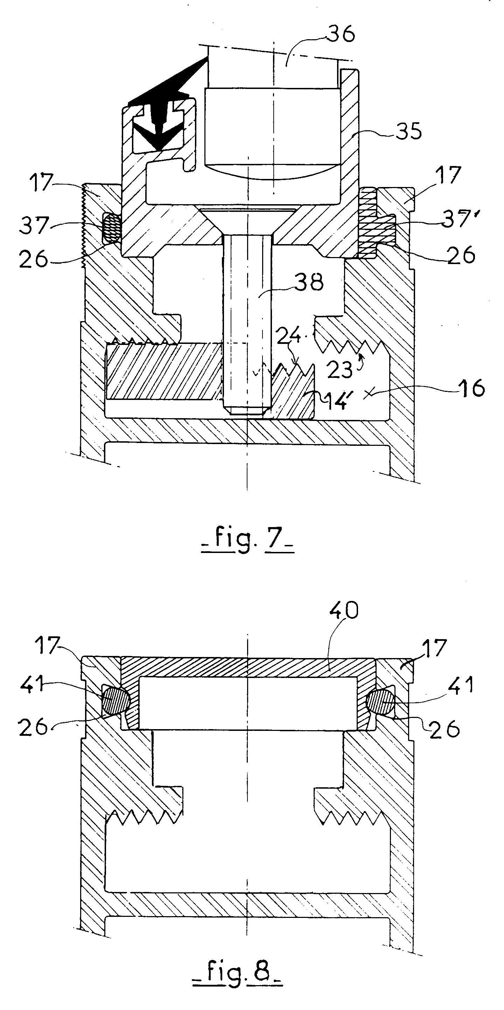

La figure 7 montre l'implantation d'un rail 35, dans la cavité 27 de la barre profilée. Ce rail 35 permet le guidage d'un volet roulant 36. Ce rail est en forme de U et il est monté de façon étanche sur la barre profilée au moyen d'un joint torique 37 et d'un joint de compensation 37', disposés tous deux dans les gorges trapézoïdales 26 des flancs 17 de la barre profilée. On remarque que le rail 35 est fixé au moyen de taquets 14' par l'intermédiaire de vis 38. Ces taquets 14' sont du même type que les taquets 14 et comportent des stries 24.
Les stries 24 de ces taquets sont imbriquées dans les stries 23 de la voie de fixation 16.

La figure 8 montre la mise en place d'un cache-voie 40 logé dans la cavité 27 de la barre profilée. Ce cache-voie est en forme de U : il est monté de façon étanche au moyen des joints toriques 41. Ce cache-voie permet d'obturer les barres profilées, notamment au niveau des seuils de portes ou des différentes ouvertures aménagées sur la carrosserie.

La figure 9 représente le montage d'un panneau d'habillage 43 sur le côté externe d'une barre profilée. Ce panneau d'habillage 43 est fixé à la barre profilée 11 au moyen d'un joint de colle 44. Pour obtenir une bonne régularité au niveau de l'épaisseur du joint de colle 44, on dispose préalablement au joint de colle, un joint 45 dénommé fond de joint, dans une gorge 46 visible également en particulier figure 5.

Cette gorge 46, peu profonde, permet de positionner avec précision, ce joint 45. Ce joint 45 est un joint autocollant, du type double face. Il adhère dans le fond de la gorge 46 et il permet un accrochage du panneau 43 et son maintien durant notamment le temps nécessaire à la polymérisation du joint 44.

On remarque également, toujours figure 9, la présence d'un jonc de finition 47 interposé entre l'aile 17 de la barre profilée et l'extrémité du panneau d'habillage 43. Pour fixer ce jonc 47 et le maintenir, la face externe de l'aile 17 comporte des stries 48, visible notamment figure 5.

La figure 10 représente l'assemblage de deux panneaux 43 sur une barre profilée, au niveau d'un angle de la carrosserie. On remarque les fonds de joint 45 disposés au niveau des gorges 46 ainsi que des joints de colle 44.

Le jonc de finition 47 est ancré au moyen des stries 48 aménagées sur l'extérieur de la barre profilée au niveau d'un angle.

On remarque, sur cette figure 10, la section d'une barre profilée qui permet l'aménagement d'un angle de la carrosserie. Les parties actives de la barre profilée, c'est-à-dire notamment les voies de jonction 16, sont au nombre de deux, disposées perpendiculairement l'une par rapport à l'autre le fond 20 de la voie de fixation constituant un côté du caisson 50 dont la section est carrée.

On remarque, figure 3, la section de la barre 12 qui constitue une sorte de poteau. Les parties actives de la barre profilée et en particulier les voies de jonction sont au nombre de deux disposées directement dos à dos.

De la même façon, ces barres profilées peuvent comporter trois parties actives disposées à 90° l'une par rapport à l'autre, pour réaliser des assemblages à trois voies.

Les figures 12 à 19 illustrent différents types de barres profilées comportant toujours la même partie active.

La figure 12 montre une barre profilée pour un assemblage à deux voies perpendiculaires. Les parties actives sont accollées l'une à l'autre et sur un caisson 51 de section rectangulaire dont un des côtés correspond au fond 20 de l'une des voies de fixation.

La figure 13 montre une barre profilée pour un assemblage à trois voies dont les parties actives sont montées sur un caisson 50 de section carrée.

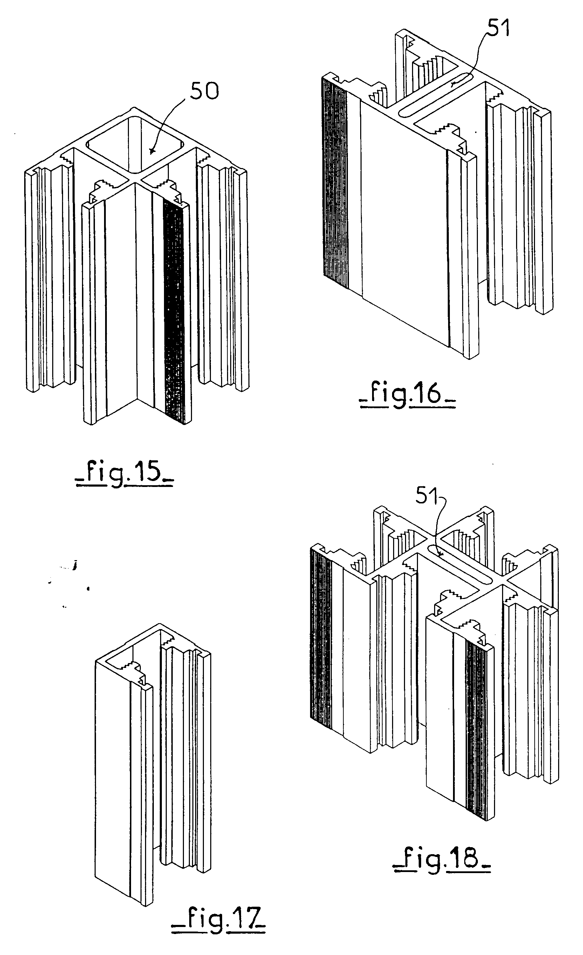

La figure 14 montre une barre profilée pour un autre assemblage à trois voies les parties actives sont disposées pour deux d'entre elles, de part et d'autre d'un caisson de section rectangulaire 51 dont les grands côtés sont formés par les fonds 20 desdites voies de fixation ; l'autre partie active est greffée sur le côté de l'une des deux autres et, partiellement sur ledit caisson.

La figure 15 montre une barre profilée pour un assemblage à deux voies perpendiculaires. Les parties actives sont réunies sur un caisson central 50 de section carrée.

La figure 16 montre une barre profilée pour un assemblage à deux voies dans un même plan. Les parties actives sont réunies dos à dos sur un caisson central 51 de forme rectangulaire.

La figure 17 représente une barre profilée monovoie.

La figure 18 représente une barre profilée du type à quatre voies comportant deux couples de voies disposés dans un même plan. Deux voies sont disposées dos à dos de part et d'autre d'un caisson rectangulaire 51. Deux autres voies sont bâties de part et d'autre d'une voie et du caisson 51.

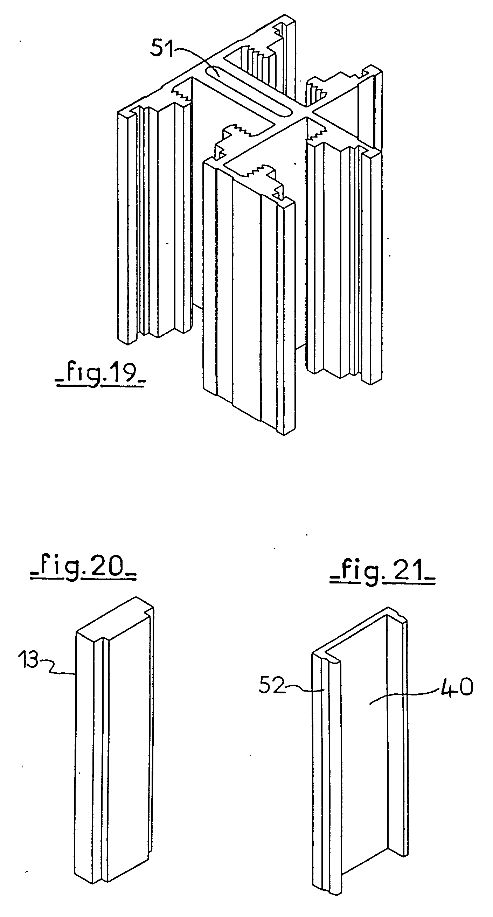

La figure 19 représente une variante de la figure 14 pour une barre profilée du type à trois voies dont la partie active a une largeur sensiblement supérieure à celle que l'on rencontre sur la barre profilée de la figure 14.

Les parties actives sont, pour deux d'entre elles, disposées dans un même plan, de part et d'autre d'un caisson central 51 rectangulaire.

La troisième partie active est greffée latéralement sur l'une des parties actives et sur le caisson 51.

La figure 20 représente une barre profilée utilisée pour la confection des goussets 13. Cette barre profilée est cintrée à volonté pour réaliser un gousset en forme d'équerre ou un gousset du type renforcé tel que représenté figure 11.

La figure 21 représente une barre profilée utilisée pour la confection du cache 40 représenté figure 8. Ce cache 40 a une section en U ; il s'insère entre les flancs 17 de la partie active d'une barre profilée et son étanchéité est réalisée au moyen des joints 41 qui se positionnent dans des rainures 52 disposées à l'extérieur des ailes latérales de ce cache, comme représenté figure 8.

## Revendications

1. Carrosserie en alliage d'aluminium du type constituée d'une structure faite de barres profilées assemblées entre elles, et de panneaux d'habillage (43) formant une structure centrale (1) en forme de cage, fixée et bridée sur un soubassement (2) quasiment indéformable, en forme de cadre rectangulaire, réalisé en acier et relié par des moyens élastiques aux longerons (3) du châssis, laquelle cage résulte d'un assemblage de profilés continus disposés de façon à former des panneaux avant (5) et arrière (6) munis de montants (M) et de traverses (T), lesquels panneaux sont réunis par des longerons (L).

2. Carrosserie selon la revendication 1, caractérisée en ce que la structure centrale (1), en forme de cage, comporte des entraits (7) disposés dans les trois plans horizontal, vertical et latéral, pour rigidifier ladite structure.

3. Carrosserie selon l'une quelconque des revendications 1 ou 2, caractérisée en ce qu'elle comporte des traverses (T) hautes et/ou basses, qui s'étendent latéralement de part et d'autre de la structure centrale (1), constituant des moyens de reprise d'efforts pour les aménagements latéraux formant ladite carrosserie.

4. Carrosserie selon l'une quelconque des revendications 1 à 3, caractérisée en ce qu'elle est constituée de barres profilées munies d'au moins une voie de fixation (16) dont les parties intérieures, coopérant avec des taquets d'assemblage (14), comportent de fines striures (23) longitudinales.

5. Carrosserie selon la revendication 4, caractérisée en ce que les taquets (14) comportent des striures (24) disposées de façon à être croisées avec celles des voies de fixation (16), lorsqu'ils sont en position active d'assemblage.

6. Carrosserie selon la revendication 5, caractérisée en ce que les taquets (14) sont réalisés à partir d'une barre profilée qui comporte des stries fines longitudinales sur une de ses faces, lesquels taquets sont découpés dans ladite barre de façon que leur face d'extrémité fasse un angle de l'ordre de 60° avec l'axe longitudinal de ladite barre.

7. Carrosserie selon la revendication 6, caractérisée en ce que les taquets (14) sont traités de façon à présenter une dureté supérieure à celle des barres profilées constituant la structure.

8. Carrosserie selon l'une quelconque des revendications 4 à 7, caractérisée en ce que les goussets d'assemblage (13) assurent un centrage automatique des barres profilées et en ce qu'ils sont conformés avec un angle légèrement supérieur à leur angle nominal, de l'ordre de 1 à 5°, de façon à réaliser une sorte de précontrainte au niveau de la liaison entre les profilés adjacents.

9. Carrosserie selon l'une quelconque des revendications 4 à 7, caractérisée en ce que les goussets d'assemblage (13) comportent, dans leur partie centrale, un renfort (131) en forme d'équerre, solidaire de la partie centrale (132) dudit gousset.

10. Carrosserie selon l'une quelconque des revendications 4 à 9, caractérisée en ce que les vis (15) servant à la fixation des taquets (14), comportent à leur extrémité, une enduction du genre colle de façon à forcer la rotation desdits taquets après leur mise en place dans la voie de fixation (16), et à renforcer l'assemblage.

11. Carrosserie selon l'une quelconque des revendications 4 à 10, caractérisée en ce que les barres profilées comportent, en plus de la voie de fixation (16), aménagées dans les flancs latéraux (17), des gorges (26) dont l'ouverture est orientée l'une vers l'autre, lesquelles gorges permettent la mise en place de joints d'étanchéité de toutes sortes coopérant avec des équipements et des aménagements logés dans la cavité (26) délimitée par lesdits flancs (17).

12. Carrosserie selon la revendication 11, caractérisée en ce que les gorges (26) ont une section trapézoïdale.

13. Carrosserie selon l'une quelconque des revendications 4 à 12, caractérisée en ce que les barres profilées comportent, extérieurement, sur leur face destinée à l'accueil et au collage des panneaux d'habillage (43), une gorge (46) peu profonde, permettant la mise en place d'un fond de joint (45) autocollant, type double face, qui définit l'épaisseur du joint de colle (44) et permet de maintenir ledit panneau pendant la polymérisation dudit joint de colle.

14. Carrosserie selon la revendication 13, caractérisée en ce que les barres profilées comportent, sur leur face extérieure d'accueil des panneaux d'habillage (43), une zone striée (48) qui assure le maintien d'un jonc de finition (47) interposé entre ledit profilé et le panneau d'habillage.

## Claims

1. An aluminium alloy car body of the type constituted of profiled bars assembled together and of covering panels (43) building a central structure (1) in the form of a cage, attached and flanged on a substructure (2) substantially dimensionally stable, shaped as a rectangular frame, made of steel and connected by elastic means to the side members (3) of the chassis, the said cage resulting from an assembly of continuous profiles arranged in order to build front (5) and rear (6) panels fitted with posts (M) and crosspieces (T), the said panels being united by side members (L).

2. A body according to claim 1, characterised in that the central structure (1), in the form of a cage, comprises tie beams (7) arrranged in the three horizontal, vertical and lateral planes, in order to rigidify the said structure.

3. A body according to any of the claims 1 or 2, characterised in that it comprises high and/or low crosspieces (7), extending laterally on either side of the central structure (1), constituting stress recovery means for the lateral fixtures forming the said body.

4. A body according to any of the claims 1 to 3, characterised in that it is made of profiled bars fitted with at least one fastening channel (16) whose inside portions, co-operating with assembly stops (14), comprise longitudinal thin scores (23).

5. A body according to claim 4, characterised in that the stops (14) comprise scores (24) arranged in order to be crossed with those of the fastening channels (16), when they are in active assembly position.

6. A body according to claim 5, characterised in that the stops (14) are built from a profiled bar which comprises longitudinal thin scores on one of its faces, whereby the said stops are cut into the said bar so that their end face describes an angle in the order of 60° with the longitudinal axis of the said bar.

7. A body according to claim 6, characterised in that the stops (14) have been handled in order to exhibit a hardness greater than that of the profiled bars making up the structure.

8. A body according to any of the claims 4 to 7, characterised in that the assembly gussets (13) perform automatic centring of the profiled bars and in that they are formed with an angle slightly greater than their rated angle, in the order of 1 to 5°, in order to exert a kind of pre-stress at the connection between the adjacent profiles.

9. A body according to any of the claims 4 to 7, characterised in that the assembly gussets (13) comprise, in their central part, a reinforcing piece (131) in the form of a square, interconnected to the central part (132) of the said gusset.

10. A body according to any of the claims 4 to 9, characterised in that the screws (15) used for fastening the stops (14) comprise at their ends, a glue-type coating in order to force the said stops into rotation after being installed in the fastening channel (16) and to strengthen the assembly.

11. A body according to any of the claims 4 to 10, characterised in that the profiled bars comprise, in addition to the fastening channel (16), grooves (26), arranged in the lateral flanks (17), the aperture of which is oriented towards one another, whereas the said grooves enable all kinds of gaskets to be mounted co-operating with equipment and with fixtures accommodated in the cavity (26) delineated by the said flanks (17).

12. A body according to claim 11, characterised in that the grooves (26) have a trapezoidal cross section.

13. A body according to any of the claims 4 to 12, characterised in that the profiled bars comprise, externally, on their face designed for accommodating and for gluing the covering panels (43), a shallow groove (46), enabling the placement of a double sided-type self-seal bottom (45), which defines the thickness of the glue seal (44) and enables to maintain the said panel during polymerisation of the said glue seal.

14. A body according to claim 13, characterised in that the profiled bars comprise, on their external face for accommodating the covering panels (43), a scored zone (48) maintaining a finish bead (47) interposed between the said profile and the covering panel.

## Patentansprüche

1. Aluminiumaufbau der Bauart, die aus einer aus miteinander verbundenen Profilstangen gefertigten Struktur sowie Verkleidungstafeln (43) besteht, die eine zentrale Struktur (1) in Form eines Käfigs bilden, der auf einem quasi unverformbaren Sockel in Form eines rechtwinkligen Rahmens angebracht und befestigt ist, aus Stahl besteht und durch elastische Mittel mit Längsträgern (3) des Chassis verbunden ist, wobei der Käfig aus einer Montage fortlaufender Profile hervorgegangen ist, die derart angeordnet sind, daß sie vordere Felder (5) und hintere Felder (6) bilden, die mit Holmen (M) und Traversen (T) versehen sind und durch Längsträger (L) verbunden sind.

2. Aufbau nach Anspruch 1,
**dadurch gekennzeichnet,**
daß die zentrale Struktur (1) in Form des Käfigs Balken (7) umfaßt, die in drei Ebenen horizontal, vertikal und seitlich angeordnet sind, um die Struktur zu versteifen.

3. Aufbau nach einem der Ansprüche 1 oder 2,
**dadurch gekennzeichnet,**
daß er hohe und/oder niedrige Traversen (T) umfaßt, die sich seitlich zu beiden Seiten der zentralen Struktur (1) erstrecken, welche Kraftaufnahmemittel für die seitlichen Ausbauten darstellen, welche den Aufbau bilden.

4. Aufbau nach einem der Ansprüche 1 bis 3,
**dadurch gekennzeichnet,**
daß er aus Profilstangen besteht, die mit wenigstens einer Befestigungsschiene (16) versehen sind, deren innere Abschnitte mit Montagekeilen (14) zusammenwirken, welche feine Rillen (23) in Längsrichtung aufweisen.

5. Aufbau nach Anspruch 4,
**dadurch gekennzeichnet,**
daß die Keile (14) Rillen (24) aufweisen, die dergestalt angeordnet sind, daß sie sich mit denen der Befestigungsschienen (16) kreuzen, wenn sich diese in der aktiven Montagestellung befinden.

6. Aufbau nach Anspruch 5,
**dadurch gekennzeichnet,**
daß die Keile (14) aus einer Profilstange gefertigt sind, welche feine Rillen in Längsrichtung einer ihrer Flächen umfaßt, wobei die Keile derart abgetrennt sind, daß ihre Außenseite mit der Längsachse der genannten Stange einen Winkel in der Größenordnung von 60° bildet.

7. Aufbau nach Anspruch 6,
**dadurch gekennzeichnet,**
daß die Keile (14) derart behandelt sind, daß sie eine größere Härte als diejenige der Profilstangen aufweisen.

8. Aufbau nach einem der Ansprüche 4 bis 7,
**dadurch gekennzeichnet,**
daß die Montagewinkelstücke (13) eine selbstätige Zentrierung der Profilstangen gewährleisten und daß sie mit einem leicht größeren Winkel als ihr Nennwinkel, in der Größenordnung von 1 bis 5° derart ausgebildet sind, daß sich eine Art Vorspannung in Höhe der Verbindung zwischen benachbarten Profilen einstellt.

9. Aufbau nach einem der Ansprüche 4 bis 7,
**dadurch gekennzeichnet,** daß die Montagewinkel (13) in ihrem zentralen Abschnitt eine Verstärkung (131) in Form eines Winkels einstückig mit dem zentralen Abschnitt (132) des Keils umfassen.

10. Aufbau nach einem der Ansprüche 4 bis 9,
**dadurch gekennzeichnet,**
daß die Schrauben (15), welche zur Befestigung der Keile (14) dienen, an ihrem Ende eine Schicht der Klebstoffart umfassen, um die Keile zur Drehung zu zwingen, nachdem sie in der Befestigungsschiene (16) positioniert sind, und um die Montage zu verstärken.

11. Aufbau nach einem der Ansprüche 4 bis 10,
**dadurch gekennzeichnet,**
daß die Profilstangen zusätzlich zu der Befestigungsschiene (16) in den seitlichen Fortsätzen (17) ausgearbeitete Auskehlungen (26) umfassen, deren Öffnung jeweils zu der anderen gerichtet ist, wobei die Auskehlungen die Einfügung von Dichtungen aller Art erlauben, die mit Ausrüstungen und Ausgestaltungen zusammenwirken, die in dem von den Fortsätzen (17) begrenzten Hohlraum (26) unterbracht sind.

12. Aufbau nach Anspruch 11,
**dadurch gekennzeichnet,**
daß die Auskehlungen (26) einen trapezförmigen Querschnitt aufweisen.

13. Aufbau nach einem der Ansprüche 4 bis 12,
**dadurch gekennzeichnet,**
daß die Profilstangen außen auf ihrer Fläche, die zur Aufnahme und zum Ankleben von Verkleidungstafeln (43) bestimmt ist, eine wenig tiefe Auskehlung (46) umfassen, welche die Positionierung einer selbstklebenden Dichtung (45) des zweiseitigen Typs gestattet, welche die Dicke der Klebedichtung (44) bestimmt und das Halten der genannten Tafel während der Polymerisation der Klebedichtung gestattet.

14. Aufbau nach Anspruch 13,
**dadurch gekennzeichnet,**
daß die Profilstangen an ihrer Außen-Aufnahmeseite der Verkleidungstafeln (43) eine geriffelte Zone (48) umfassen, welche das Halten einer Abschlußleiste (47) gestattet, die zwischen der Profilierung und der Verkleidungstafel gehalten wird.
